Europäisches Patentamt

European Patent Office

Office européen des brevets

(11) Publication number: **0 317 373**
**A2**

# (12) EUROPEAN PATENT APPLICATION

(21) Application number: **88311009.0**

(51) Int. Cl.⁴: **H 04 B 9/00**

(22) Date of filing: **21.11.88**

(30) Priority: **20.11.87 GB 8727253**

(43) Date of publication of application:
**24.05.89 Bulletin 89/21**

(84) Designated Contracting States:
**AT BE CH DE ES FR GB LI NL SE**

(71) Applicant: **BRITISH AEROSPACE PUBLIC LIMITED COMPANY**
**11 Strand**
**London WC2N 5JT (GB)**

(72) Inventor: **Grant, Michael Alistair British Aerospace Space and Communications Division Argyle Way Stevenage, Herts SG1 2DA (GB)**

**Matthews, Nicholas F.**
**4914, Quail Ridge Drive**
**Plainsboro, NJ08536 (GB)**

**Robson,David R.§British Aerospace Space and Communcations Division Argyle Way Stevenage Herts SG1 2DA (GB)**

(74) Representative: **Dowler, Edward Charles et al British Aerospace Public Limited Company Corporate Patents Department Brooklands Road Weybridge Surrey, KT13 OSJ (GB)**

(54) Laser beam communication between spacecraft.

(57) A laser beam communication system for communication between two spacecraft wherein, for link acquisition, the initiating spacecraft scans a projected laser beam over an area expected to contain the position of the target spacecraft (ie the one with which communication is to be set up) and meanwhile also scans the field-of-view of a detector over the same area and along the same scan path. On receiving a glimpse of the projected beam, the target spacecraft sends a return beam to the position from which the glimpsed beam arrived, this is received by the detector on board the host spacecraft and the beam projected from the host is maintained directed at the relevant position. During the scanning, to avoid the projected beam having to be scanned slow enough so that it dwells on every point in the search area long enough for the projected beam to reach the target, for the target to respond, and for the return beam to travel back to the host (which makes for a rather slow acquisition), the scanning of the detector field-of-view is not co-incident with that of the projected beam but instead, using appropriate separately controllable scanning mechanisms, lags behind the projected beam by a time dependent on the distance between the two spacecraft plus the response time of the target.

EP 0 317 373 A2

**EP 0 317 373 A2**

## Description

### LASER BEAM COMMUNICATION BETWEEN SPACECRAFT

This invention relates to "free space laser communication systems" ie systems in which laser beams are used to communicate between two spacecraft for example two orbiting satellites. By way of example, one such system is disclosed in European Patent Specification No. 289306. In such systems it may be necessary to establish the laser link between the two spacecraft before any communication can take place, ie to achieve a situation in which a laser beam generated, on board one spacecraft is correctly pointed so as to be received by the other spacecraft and vice versa. This is referred to as link acquisition.

It is desirable in order to minimise the system mass and complexity that the means of link acquisition shall use only optical elements within the laser communications system, and not additional links say at radio frequency. The 'host' spacecraft ie the one which is to initiate communication with the other (called the 'target') is likely to be able to maintain its own attitude only to within a certain accuracy (typically plus or minus 0.2 degrees in each axis). Thus, although the host can be given information about the position of the target relative to the host, because of the residual attitude error of the host, the host will only be able to predict the target direction relative to itself in terms of a 'cone of uncertainty' which will almost certainly be somewhat larger than the angular size of the laser beam. Thus it is necessary to perform some form of search. In the search, the laser beam is scanned by the initiating spacecraft over the cone of uncertainty in which the target is believed to lie.

At the same time the field of view of an optical sensor, such as a charge coupled device, is also scanned over the cone of uncertainty in order to receive and locate the beam sent back by the target to signal that it has been illuminated. It is necessary to scan the optical sensor as well as the beam because its field-of-view is set by considerations of accuracy and is also likely to be less than the cone of uncertainty. In fact, in general, the sensor field of view will be approximately equal to the angular size of the acquisition laser beam.

It has been proposed previously that link acquisition be performed by pointing the field-of-view of the optical sensor at exactly the same area of space that is currently being illuminated by the laser beam. Often this is arranged by the sensor field-of-view and laser beam being directed by the same scanning mechanisms.

Then, however, each point in the uncertainty cone must be illuminated for long enough to allow for the time light takes to travel from the initiating spacecraft to target, for the target to react to this, for the return beam to travel from the target to the initiating spacecraft and for the latter to react thereto. However, fast the response of the target and initiator, the scan speed and hence the time taken for acquisition will always be limited by the time light takes for the 'round trip'.

The object of this invention is to achieve more rapid link acquisition.

According to one aspect of the invention, there is provided a laser beam communication system for communication between two spacecraft including, for use on board one of the spacecraft, link acquisition means comprising:-
a laser radiation source and optical means for projecting the laser radiation from the source into space as a beam;
first scanning means for scanning said beam over a field-of-view containing the expected position of the other spacecraft;
radiation sensitive detector means and further optical means for imaging a portion of said field-of-view onto the detector means;
second scanning means of scanning said portion over said field-of-view, and
control means connected to said first and second scanning means and operable for causing the field-of-view portion imaged onto the detector to scan over the field-of-view following the scan pattern traced out by the projected laser beam but lagging behind the laser beam by a time dependent upon supplied information indicative of the distance between the two spacecraft.

According to a second aspect of the invention there is provided a spacecraft comprising:-
a laser source with optics to produce a beam in the far field;
an optical sensor with optics to produce an image of part of the far field (the field-of-view) on its surface.
first scanning means to scan the laser beam in the far field;
second scanning means to scan the field-of-view of the optical sensor; and
on board electronics to control the scanning mechanisms and to process the optical sensor output in order to follow an acquisition sequence.

For a better understanding of the invention reference will be made, by way of example, to the accompany in drawings, in which:-

figure 1 is a diagram for explaining how a laser beam is scanned over a field-of-view and

figures 2 and 3 are block diagrams of respective embodiments of link acquisition systems.

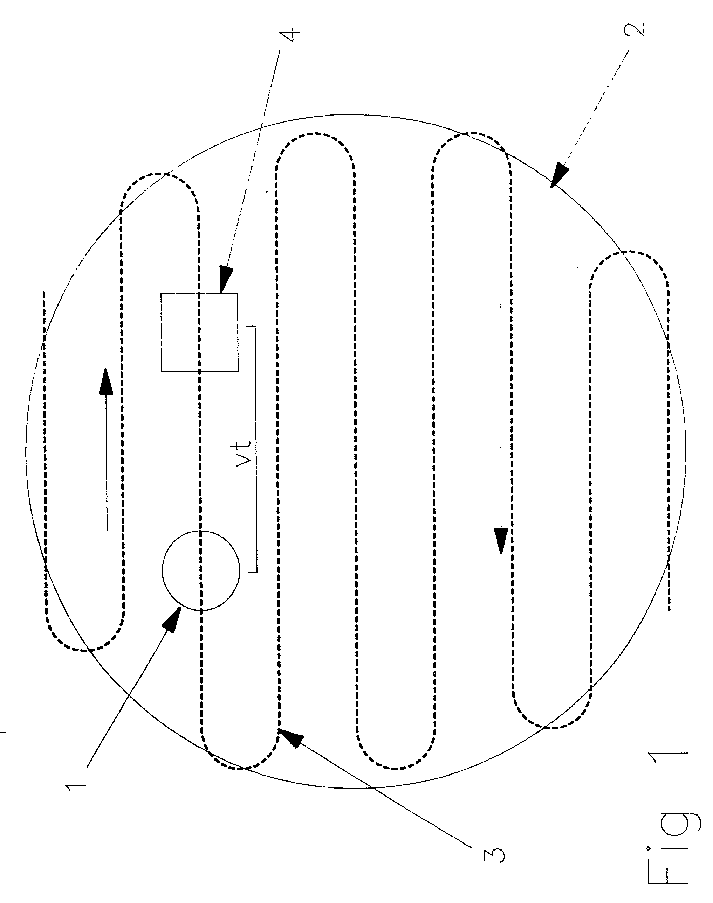

Figure 1 shows the view, from the host spacecraft (not shown), of the area covered by a laser beam 1 projected from the spacecraft and the extent of a "cone-of-uncertainty" 2 includes the target spacecraft although its precise position within the cone of uncertainty is not known. In order to find the target, the centre of the beam 1 is scanned along the path 3 so that, if the scan is completed, eventually the whole of cone 2 will have been illuminated. At some time during the scan, the target spacecraft will glimpse the beam and return its own laser beam, this being received by a detector (not shown) on board the host. As noted earlier, the instant field-of-view 4 of the detector covers only a portion of the cone 2, which portion may be about the same size as that covered by beam 1, so the detector field-of-view is also scanned over the cone 2 along path 3. However, to avoid the need for every point within cone 2 to be illuminated for long enough to allow radiation to pass in both directions between the two craft plus the response time of the target beam return system, the detector field-of-view 4 is made to lag behind the beam 1 by a distance vt where v is the scanning speed and t is the sum of the times taken for light to pass from the host to the target, for the target to respond to its glimpse of beam 1 and generate a return beam, and for that return beam to travel back to the host.

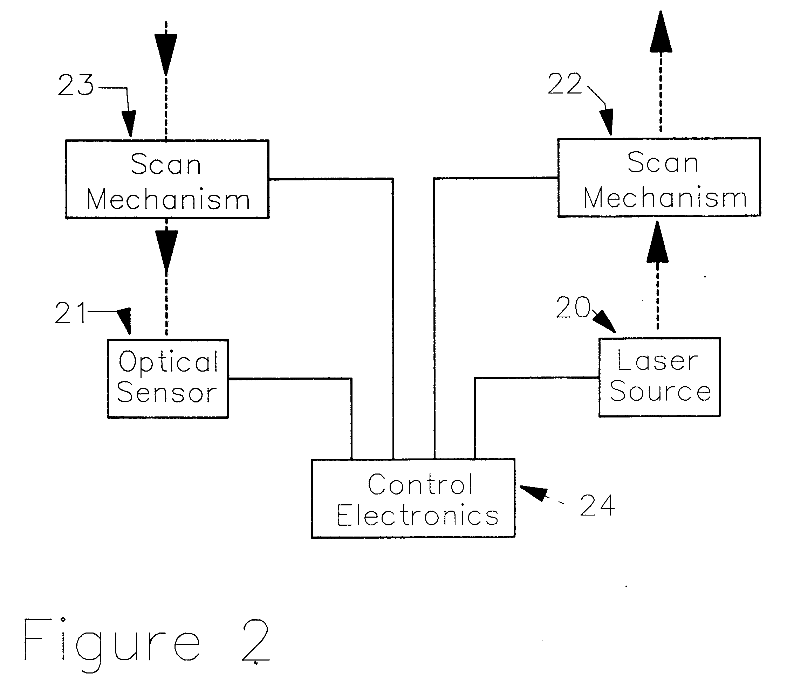

As shown in figure 2, to achieve the above effect, the host spacecraft may comprise a laser beam generator 20, a detector 21 and two separate scanning mechanisms 22 and 23, one for scanning the beam 1 from generator 20 and the other for scanning the field-of-view of detector 21. An electronic control system 24 controls the two scanning mechanisms so as to provide the required time lag, this being dependent upon information (supplied from the ground say) about the distance between the two craft and the response time of the target. Of course, the supplied information could also include the relation direction of the target so that the host can direct its initial acquisition scan over the proper cone of uncertainty. The system 24 also controls laser beam generator 20 and receives signals from detector 21 indicative of the presence and position of the return beam 25 from the target.

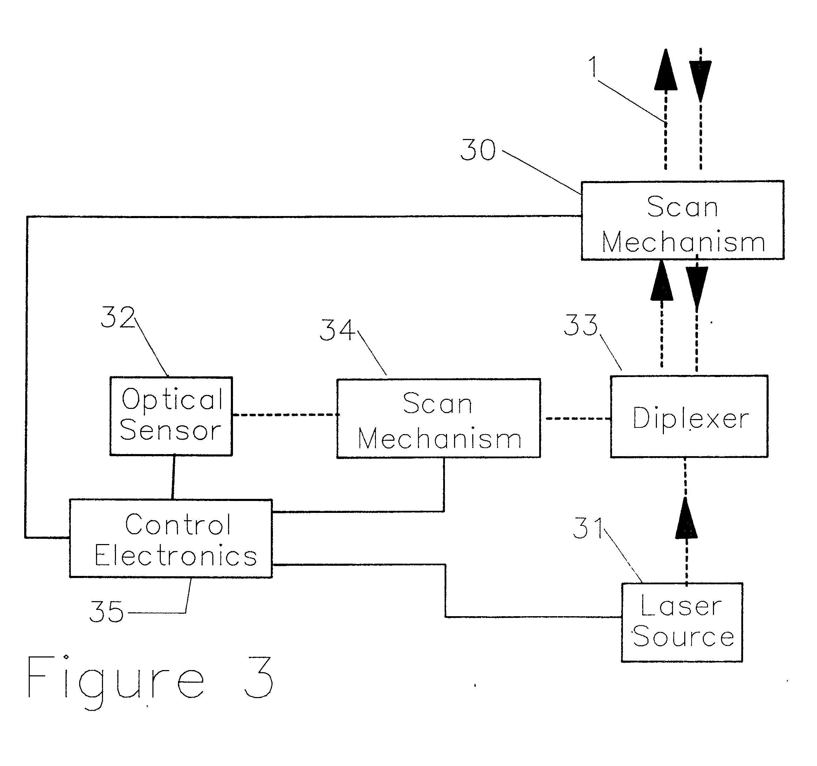

In a second embodiment of the invention (figure 3), there is a main scanning mechanism 30 which scans the beam 1 laser beam generator 31 and which also, in effect, scans the field-of-view of a detector 32, the optical paths from the generator 31 and to the detector 32 being combined by an optical diplexer 33, for example a dichroic mirror (the radiation of the return beam normally having a wavelength different to that of the transmit beam). Between the detector 32 and diplexer 33 there is an auxilliary scanning mechanism 34 of which the function is only to deflect the detector field-of-view by the appropriate lag amount ie the auxilliary scanning mechanism here operates only to give a bias deflection - the amount of the bias will be dependent upon the distance between the two spacecraft and, depending upon the particular scan pattern, the amount and direction of the bias may have to vary during the scan executed by the main mechanism. However, the auxilliary mechanism does not necessarily have to follow the same full scanning movement as the main mechanism 30. As in figure 2, the scanning mechanisms 30 and 34 and the laser generator 31 are controlled by an electronic control unit 35 which also receives information from detector 32. Each of the scanning mechanisms in figure 2 and 3 may comprise a pair of servo-controlled mirrors (not shown) for example of the kind discussed in the article "Pointing acquisition and tracking for Intersatellite Optical Data links" by W. Auer in the proceedings of the ESA Workshop on Space Laser Applications and Technology, Les Diablerets, 26-30th March, 1984 (ESA SP-202, May 1984) pages 131-137.

As noted, with the link acquisition arrangement described herein, the detector field-of-view follows exactly the same scan profile as the laser beam but delayed in time by the time taken for light to travel from initiating spacecraft to the target and back again plus the reaction time of the target. Thus, each point in the uncertainty cone need now be illuminated only for long enough that the detection sensor on the target will actually respond to the received beam, ie scan speed is only limited by the sensitivity of the detector on the target.

Once the target spacecraft has glimpsed the laser beam projected from the host, it sends its return beam out in the direction from which the glimpsed beam arrived and this return beam is eventually received by the host by which time, of course, because the host beam is not now being made to dwell on every point in the scanned area for the total of the two way transit time plus target response time, the host beam will have moved on along its scanning path and will no longer be illuminating the target. Thus, as a final step in the acquisition process, once the return beam is seen by the detector on board the host and its position has been signalled to the control electronics 24 or 35, the control electronics stops the further scanning of the laser beam 1 and instead controls the scanning mechanisms so as to bring the beam back to pointing in a direction such that it will be continuously received by the target. Depending upon any relative movement of the two spacecraft, the beam may not be pointed directly at the target but rather at a position where the target is going to be by the time the beam arrives there, ie the projected beam may be biased to a look-ahead position for example by using a suitable look-ahead mechanism (another pair of servo-controlled mirrors perhaps) as disclosed in European Patent Specification No. 289306.

The two-way link being now established, communication can take place by appropriate modulation of the two laser beams.

It may be that, when the beam projected by the host is brought back to the position at which the target is detected, link acquisition is still not achieved for example due to attitude drift by the host spacecraft. If this happens, then the control electronics 24 or 35 initiates another search scan of the projected beam this time over a reduced in size "cone-of-uncertainty" centred on the previously found position. The procedure then continues as before. In continuing the further search process, the control electronics could be arranged to take account of the fact that the attitude drift of the host may be increasing, ie using supplied information about the attitude drift rate of the host, it could set the size of the cone-of-uncertainty during the subsequent search scan(s) in dependence upon the elapsed time since the return beam from the target was seen.

## Claims

1) A laser beam communication system for communication between two spacecraft including, for use on board one of the spacecraft, link acquisition means comprising:-
a laser radiation source and optical means for projecting the laser radiation from the source into space as a beam;
first scanning means for scanning said beam over a field-of-view containing the expected position of the other spacecraft;
radiation sensitive detector means and further optical means for imaging a portion of said field-of-view onto the detector means;
second scanning means for scanning said portion over said field-of-view, and
control means connected to said first and second scanning means and operable for causing the field-of-view imaged onto the detector to scan over the field-of-view following the scan pattern traced out by the projected laser beam but lagging behind the laser beam by a time dependent upon supplied information indicative of the distance between the two spacecraft.

Fig 1

vt

1

2

3

4

EP 0 317 373 A2

Figure 2

EP 0 317 373 A2

Figure 3

EP 0 317 373 A2